# EUROPEAN PATENT SPECIFICATION

(11) **EP 1 094 283 B1**
(45) Date of publication and mention of the grant of the patent: **20.10.2004**
(21) Application number: 99922195.5
(22) Date of filing: 02.06.1999
(51) Int. Cl.: F24J 2/24, E04D 13/18

(54) **SOLAR ENERGY COLLECTOR ROOFING FOR BUILDINGS AND PANEL INCORPORATING THE SAME**
GEBÄUDEDACH ZUR NUTZUNG VON SOLARENERGIE UND DAZU GEHÖRIGES PANEEL
COUVERTURE PERMETTANT DE CAPTER L'ENERGIE SOLAIRE POUR EDIFICES ET PANNEAU FORMANT CETTE COUVERTURE

(30) Priority: 03.06.1998 WO PCT/ES98/00160; 23.03.1999 ES 9900588
(43) Date of publication of application: 25.04.2001
(73) Proprietor: Biohabitat SXXI, S.L., 08190 Sant Cugat Del Vallès (ES)
(72) Inventor: OISTRACH GARCIA DE CASTRO, Eduardo, E-08860 Castelldefels (ES); GARCIA CORS, Josep, E-08190 Sant Cugat Del Vallès (ES)
(74) Representative: Gislon, Gabriele
(86) International application number: PCT/ES1999/000159
(87) International publication number: WO 1999/063281

(56) References cited:
- FR-A- 2 330 974
- US-A- 4 336 793

## Description

The present invention concerns a solar energy collector roofing for buildings, said roofing being structural and self-supporting and being apt to replace a conventional roofing at no excessive additional cost thereby besides functioning as a solar energy collector.

The present invention does besides concern a panel integrating a solar energy collector roofing for buildings of the above-mentioned type.

The applications for this invention are varied within the field of the heat-exchanging plants used in different types of buildings. In the domestic field are to be pointed out the obtention of sanitary hot water, the radiant-floor heating, the warm-air heating, the air-conditioning through the use of a heat pickup machine, and the swimming pool conditioning. In the farming sector the invention can be used, for example, for harvest kilns and stable heating, and in the industrial sector it can find application as a heat supply means for thermal processes of low heat intensity.

The harnessing of the solar energy makes sense to the fullest extent of the expression as a complement to the conventional energy production means based on nonrenewable sources such as petroleum, coal or uranium, or to power plants seriously affecting the environment such as the hydropower plants and aeolic plants.

Although there is at present a technology allowing to directly transform the solar energy into electric power, said technology is extremely expensive and is hence reserved for very specific applications.

Nevertheless, the utilization of the heat provided by the solar energy can be realized at a sensibly lower cost within the reach of most economies. Although a great part of the energy consumed in the developed countries is in form of electrical energy, a significant portion of this latter is used to produce thermal energy. Therefore, the thermal utilization of the solar energy has a wide application field for example for hot water supply and heating purposes especially in the household sphere.

It would be therefore desirable to have a solar energy collector system apt to be individually installed for each building and able to totally or in great part meet the hot water and heating demands of said building, at least during the highest insolation periods. A massive implantation of such an energy collection system individually provided to each building would represent on a general level a great saving of other energies obtained from nonrenewable sources. Nevertheless, an essential condition for such a massive implantation to take place is that the installation of the solar energy collector device as an integrating part of a building has very reduced additional costs as compared with the costs of the already implanted standard approaches, said additional costs being even possibly null when providing a firstly erected building with said device.

### BACKGROUND OF THE INVENTION

Numerous solar energy collector devices are known which are provided to be preferentially installed on the roof of a building. Patent US-A-4,338,921 specifies a classical example of a device of this kind comprising solar energy collector panels apt to be placed, for example, on top of a roof, as can be seen when looking at Fig. 1 of said patent. The collector panels warm up a liquid being pumped around a closed circuit comprising a heat-exchanging coil arranged inside a water tank connected to the circuit distributing the hot water to the building. The warm water from said tank is ulteriorly passed through a conventional electric or gas heater in order to thus raise its temperature up to a desired level.

The system specified by said US-A-4,338,921 incorporates the essential elements defining any elementary system for the heating up of a fluid through solar energy especially in domestic applications. Nevertheless, the panels it incorporates can certainly be superimposed onto a conventional roof but in no case are conceived to replace said roof, this always entailing a cost of a considerable magnitude to be added to the cost of the conventional building.

On the other hand, in the case of said panels their surface exposed to the solar radiation is of relatively reduced dimensions relative to the surface of the roof on which they are installed. This forces to seek a highest heat collection efficiency per unit of area, said requirement bringing about a high cost per panel to be added to the increase of the general cost of the plant.

Patent EP-A-0 073 843 specifies a system of plates provided with elements for the accumulation of solar energy and apt to be extended on top of a conventional roof. This is another example of a device whose cost is to be added to that of the conventional roofing, said device hence not being an alternative to this latter.

Patent EP-A-0000543 specifies a roof or skin air-conditioning building element apt to be used to collect solar energy thereby occupying the totality of the surface of a building roof section. This device comprises at the highest part of the constructive element two ducts for a heat-exchange liquid, a number of forked tubes orthogonally extending from said ducts towards the lower part and thus covering the whole region of the surface to be air-conditioned. Each of the two ends of the forked tubes is respectively connected to one of said two ducts of the upper part of the building element thus forming a closed circuit. A number of plates are arranged on top of and underneath said tubes thus covering said roof section. Also specified is the grouping of several of said tubes and plates thus forming panels.

Although this patent does already foresee in one of its modes of operation the utilization of the whole surface of the roof of a building for the collection of solar energy, it has not been foreseen that the very elements forming the energy collecting system constitute structural members of the building provided to replace the conventional roof of this latter. In all of the embodiments of the above-mentioned patent said tubes, ducts and plates are not in fact bearing components of said building element but are rather provided to rest on top of an independent supporting structure provided with its own bearing members (as shown by Figs. 1, 8, 11 and 14 of said patent), although some of said embodiments provide that the elements of the device can possibly function as reinforcements for said supporting structure.

Patent EP-B1-0 270 910 in its turn specifies a solar roofing provided to replace the roof of a building, said roofing being self-supporting and not requiring to be supported through a placement of girders. Said roofing is nevertheless in no way a conventional roofing since it has on its upper surface a number of reflecting and collecting surfaces forming a complex arrangement of compartments and folds in order to optimize the collection of the solar energy. At the bottom of said compartments channels of reduced passage cross-section are placed through which a heat carrying fluid (liquid or gas) circulates.

The orientation of said reflecting and collecting surfaces must be accurately calculated, designed and realized according to the specific location and orientation of each building in particular.

Due to its special configuration the roofing of said patent EP-B1-0 270 910 does not have an upper surface regular or strong enough to stand the weight of a person standing on it for example in order to check up or repair said roofing.

On the other hand, due to the existence of compartments and folds on the upper surface of said roofing this latter becomes very prone to the formation of dust and earth deposits that can be consolidated by the growth of plants thus increasing the weight resting on its structural members and plugging the passages provided for the drainage of the rain water. Said compartments are also very inconvenient in case of wind or snow.

Said roofing besides has an external appearance very different from that of the conventional roofings, this forcing to make an additional design effort in order to achieve the architectural harmonizing and integration of said roofing with the rest of the building.

Finally the complexity of the structure and configuration of the part of said roofing exposed to the sun and the special conditions for its erection cause its cost to be sensibly higher than that of a conventional roofing made of metal, for example, and therefore its manufacture and installation will hardly attain the levels of massive implantation within the building industry required to reach the objectives of a collective energy saving and reduction of the environmental pollution sought by the present invention, the application of said roofing system being hence left as the private option of a house owner at the expense of a cost increase.

FR 2330974 patent describes a solar energy capture device that may form a roof component, which consists of a receiver plate and at least one circulation pipe for the heat-carrying fluid, the said receiver plate and the said circulation pipe are integral parts of a single profile, which guarantees optimum heat transfer between the receiver plate and the circulation pipe, and the fact that the profiles are manufactured on a continuous production line means minimum component costs. In an example of the cited capture device, the said circulation pipe, at least, is located between two plates, where one is called the receiver plate and the other the structure plate, which results in a rigid capture device, which may then be self-supporting. Additionally, the cited profile contains side panels that simultaneously form elements for longitudinal rigidity, capture device supports and the means leak-tight coupling one capture device to the next.

However the capture device in the cited FR2330974 patent is only a roof component, which does not resolve the complexity of a complete roof, and in addition it is only self-supporting when structural reinforcement components are added to the receiver plate and the circulation piping, such as the cited structure plate or the cited side panels, which do no perform any function within the solar energy capture and exploitation system. Additionally, the collector and distribution piping which is necessary for the said energy capture and exploitation system do not form an integral part of the capture device, so that they do not contribute any function of roof-strengthening elements.

US-A-4 336 793 discloses a strip for forming a solar energy panel having a configuration that interlocks with heat transfer conduits wherein adjacent strips can be interlocked together to form panels, which can serve additionally as a roofing material. However US-A-4 336 793 does not disclose fluid-carrying tubes directly exposed to sunlight and are not integral to the strip (sheet metal) and thus not contributing to structural strengthening of the panel.

It is therefore an object of the present invention to provide a roofing for buildings which besides functioning as a usual waterproofing, heat-insulating structural member of the construction at the same time is a solar energy collector, with production and installation costs equivalent to or only slightly higher than the costs of the conventional roofings, and with production and installation methods comparable to those used at present for said conventional roofings, in order to thus allow its massive implantation within the building industry both for firstly erected buildings and for the refurbishment of old buildings.

Another object of the invention is to provide for a building a roofing provided to be able to collect solar energy without needing a specific orientation of each of its members, said roofing only requiring to be positioned as per a best suited general orientation of its totality and basing its efficacy on an exposure of the possibly biggest solar energy collecting surface rather than on the intrinsic efficiency of each of the collecting members.

Yet another object of the invention is to provide for a building a roofing provided to be able to collect solar energy and to be practicable, i.e. to allow and support the access of a person to its surface for inspection or repair purposes, for example.

An additional object of the invention is to provide for a building a roofing provided to be able to collect solar energy thereby having a clear upper surface with no hindrances to obstruct the drainage of water.

A further object of the invention is to provide for a building a roofing provided to be able to collect solar energy and having an external appearance similar to that of a conventional metallic roofing and hence not requiring for its application to be additionally harmonized with the usual building elements since it exhibits once installed a full architectural integration.

One last object of the invention is to provide for a building a roofing system provided to be able to collect solar energy and to be apt to be formed by means of connecting several previously checked prefabricated panels.

### SUMMARY OF THE INVENTION

These objects are attained by providing a solar energy collector roofing for buildings which is formed by a system of plate members made of a heat-conductive, waterproof material and apt to be connected to each other thus forming also waterproof connections, said plate members incorporating channels for a heat carrying fluid connected at their ends to a distributor duct and to a collector duct, respectively, thus forming a part of a generally closed circuit provided for the thermal utilization of the energy accumulated by said fluid, in such a way that the whole surface area of the roofing becomes a single solar-heat collector.

Preferably said plate member, including said channels, has its lower surface lined with a thick layer of heat-insulating material functioning both to prevent the heat carrying fluid from loosing heat through the tubular shapes and to heat-insulate the building in a conventional manner. If desired, said heat-insulating material can have its open surface covered with a finishing plate or sheet.

An essential characteristic of the instant invention lies in the fact that said plate members together with said channels and said distributor and collector ducts in their turn form structural members apt to be self-supporting and to totally or in great part possess the bearing capacities demanded from a conventional roofing, which, together with its heat-insulating and waterproofing properties, renders the solar energy collector roofing as per the present invention apt to replace a conventional roofing at low or null additional cost.

In the roofing as per the invention the heat utilization circuit can be both an open or a closed circuit. In the case of an open circuit a generally gaseous fluid, especially atmospheric air, is introduced at a temperature T₁ through the distributor duct towards said plurality of channels where it gradually warms up by virtue of the solar radiation as it circulates till exiting at a temperature T₂ higher than T₁ through the collector duct directly into the premises or enclosure to be heated. Such an open circuit system is specially useful in applications such as farming kilns, stable heating, industrial bays, sports pavilions and the like.

In case of the circuit being a closed one as in the majority of applications, especially those for providing sanitary hot water and domestic heating, a primary circuit is established which is the actual closed circuit, and a secondary circuit is also established which is open in the case of hot water for consumption or closed in the case of radiator heating, for example. The primary circuit is formed by the ducts of the roofing's heat collection system, i.e. the distributor duct, the plurality of longitudinal channels and the collector duct, and by a line section connecting the collector's outlet with the distributor's inlet after having passed through a heat-exchange section. Along said primary circuit circulates a heat carrying fluid (preferably common water) entering through the distributor duct at a temperature T₁ towards said plurality of channels where it gradually warms up by virtue of the solar radiation as it circulates through them till exiting at a temperature T₂ higher than T₁ through the collector duct from where it is conducted to said heat-exchange section (typically being a tank) which it enters from its top at the temperature T₂ to later on exit through the bottom at the temperature T₁ to be conducted from here again to the distributor duct. The secondary circuit is for example the circuit distributing the hot water to the building, and incorporates a heat exchanger, such as a coil, in said heat-exchange section, i.e. that said heat exchanger is submerged in said heat carrying fluid of the inside of said tank. The fluid of the secondary circuit enters the heat exchanger through its bottom at a temperature T₁' and exits through the top at a temperature T₂' higher than T₁' towards the place of consumption.

The circulation of the heat carrying fluid in the primary closed circuit is normally produced by the convection of the very heat carrying fluid A (thermosyphonic circulation), although it can be assisted by a pump if that is deemed necessary. Such pump can be driven by an alternating-current electric motor fed from the mains supplying the building, or it can be driven by a direct-current electric motor fed from a photovoltaic module station collecting the solar radiation energy.

It is evident that a collector made up as per the present invention, without a glass cover such as that usually equipping the conventional collectors, will have greater energy losses although its efficiency won't be much lower than that of said conventional collectors provided that it works at moderate fluid temperatures of up to 45°C. This not very favourable factor is compensated by the fact that the collecting surface available is much bigger as provided by the optimum use of the totality of the available surface area of the roofing of the building, and by the substantial weight and cost reduction brought about by the absence of said glass cover.

In order to optimize the manufacture, installation and checking of the roofing, according a to a preferred exemplary embodiment of the present invention connectable panels have ben provided. Each panel comprises one of said plate members provided with a solar energy collecting surface and integrating a plurality of said longitudinal channels and tubes functioning as a distributor duct and a collector duct and arranged at the ends of the plate member as per a transversal arrangement with respect to the channels, the respective ends of said channels being connected to said tubes. Thus each panel integrates a subcircuit for a heat carrying fluid, with an inlet into the tube functioning as a distributor and an outlet out of the tube functioning as a collector. Each panel can also advantageously incorporate a layer of heat-insulating material lining the surface that is not exposed to the solar radiation, as well as a heat-insulating lining for the tubes functioning as the distributor and collector ducts. When in a building said panels are provided to have their lower part visible the open surface of the layer of heat-insulating material is lined with a finishing plate or sheet.

The panels do also include at their sides means to facilitate their mutual connection in order to form roofings of great surface, in which case each of the individual subcircuits of each panel can communicate with the others so as to thus form part of a single circuit, either open or closed, for a heat carrying fluid, or else said subcircuits can communicate by groups thus forming several circuits.

Said panels are preferably prefabricated, in which case they exit the works in a finished and checked condition thus guaranteeing that they have passed adequate strength and pressure buildup tests. The installation of the roofing is thus limited to the placement and mechanical securing of the panels with their respective sides arranged in a mutually connected arrangement on adequate supports, to the waterproofing of the connections between the panels (if said waterproofing is not automatically established by the very shape of the plates), to the connection of the inlets and outlets of the individual subcircuits of each panel thus forming one or more open or closed circuits as per a predesigned diagram, and to the final finishing of the roofing with gutter, ridge cap, finial and leader members and the like, whereupon the whole plant can be advantageously put on site through a final pressure buildup test under load.

A typical application of the roofing as per the present invention is that of providing sanitary or heating hot water in the domestic sphere. In such a case the system comprises one or more primary circuits for a heat carrying fluid, i.e. those closed circuits comprising the channels and the distributor and collector ducts of the roofing, and one or more secondary circuits, i.e. those circuits distributing the water to the dwelling or dwellings of the building. The heat transfer between the primary circuit or circuits and the secondary circuit or circuits is carried out in one or more heat-exchange sections for example of the tank-and-coil type, with the particularity that the heat carrying fluid of the primary circuit is the fluid filling up the tank, and the fluid of the secondary circuit is the fluid circulating through the coil submerged in the tank.

The fluid used as a heat carrier in the primary circuit is selected from the group formed by tap water, deionized water treated with corrosion inhibitors and/or antifreeze, heat-transfer oil or any other fluid apt to be used for the specific application in question. The nature of said fluid will determine the dimensions and materials characteristic of the structural tubular shapes and the conditions for their maintenance.

In an exemplary embodiment of the invention one or more tanks for one or several heat-exchange coils besides form supporting members for the collector duct or ducts thus additionally functioning as structural members supporting the roofing.

The essential advantages offered by the solar energy collector roofing for buildings being the object of the present invention are the following:
it is a self-supporting solar energy collector roofing wherein each member functions as a conventional bearing, waterproofing and/or heat-insulating member, and at the same time functions as a solar thermal energy collecting, preserving and/or conducting member, the manufacture and installation of said roofing hence not necessarily involving a cost increase relative to a conventional roofing of equivalent quality;
it has an accessible and clear outer surface with no hindrances to obstruct the drainage of the rain water or the snow, said surface besides functioning as a bearing member;
its external appearance does not substantially differ from those of the conventional metallic roofings;
its production and installation does not require techniques different from those used for the conventional roofings, said solar energy collector roofing hence being apt to be directly integrated with the usual procedures of the building industry.

A massive implantation in the short term of the solar energy collector roofing for buildings as per the present invention is made possible by all these advantages, with the consequent contribution to the energetic saving and to the lowering of the environmental pollution levels it entails.

### BRIEF DESCRIPTION OF THE DRAWINGS

A more detailed description of the invention is given below by means of exemplary embodiments shown in the accompanying drawings provided only by way of illustrative examples in no case limiting the scope of the present invention. In the drawings:
Fig. 1 is a plan-view of a roofing as per the invention;
Fig. 2 is a plan-view of a roofing formed from several panels as per the invention;
Fig. 3 is a perspective view of a panel integrating the roofing of Fig. 2;
Figs. 4 through 10 are enlarged views showing different ways to integrate channels with a plate member either of the roofing or of the panel of the invention;
Figs. 11 through 14 are enlarged front views showing different alternative arrangements of the connection between two adjoining plate members of the roofing or of the panels of the invention;
Fig. 15 is a local elevation of a cross-section of a building provided with a roofing as per the present invention showing a functional sketch of this latter; and
Fig. 16 is a top view of a tank integrating a roofing as per the present invention.

### DETAILED DESCRIPTION OF SOME EXEMPLARY EMBODIMENTS

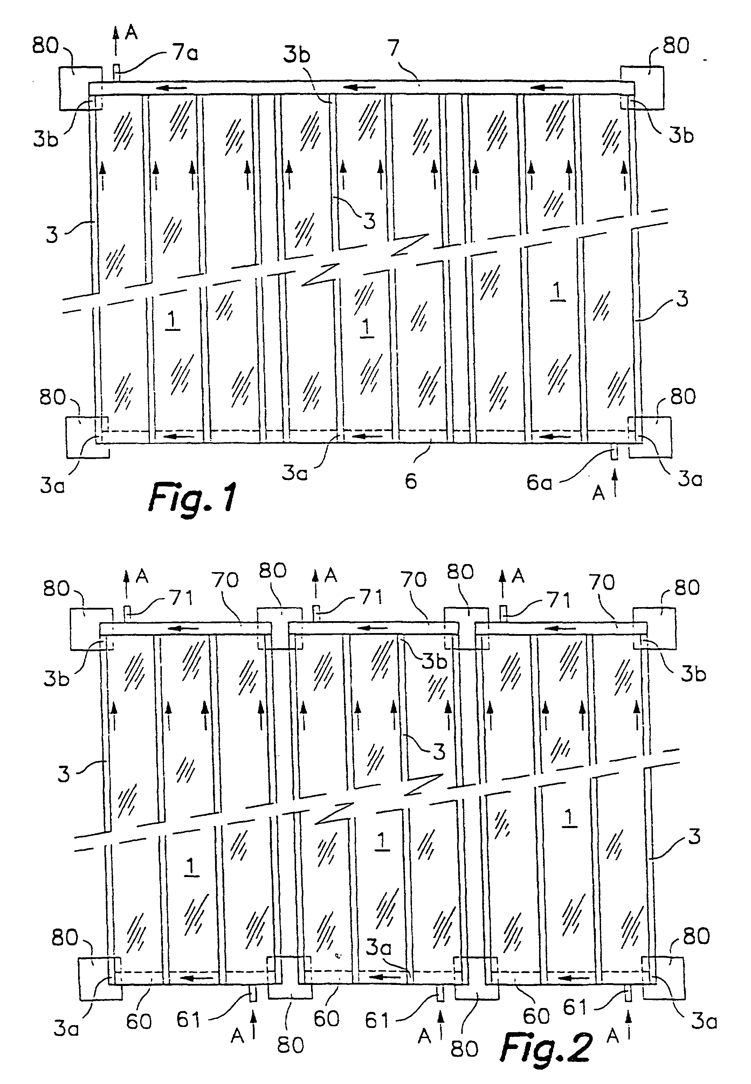

Referring in the first place to Fig. 1, a plan-view of a solar energy collector roofing as per the present invention is shown schematically by said figure. Said roofing is formed from several heat-conductive, waterproof plate members 1 apt to be connected to each other thereby forming waterproof connections in such a way that a solar radiation pickup surface is obtained which encompasses the whole surface of said roofing. Each of the plate members 1 integrates a plurality of channels for a heat carrying fluid A, said channels being formed by hollow, longitudinal shapes 3 attached to or integrating said plate member 1. Together with said longitudinal shapes 3 the plate member 1 forms an assembly that is apt to totally or in great part stand the stressing created by the design load of said roofing and corresponding to the roofing surface area formed by said assembly.

Each of said longitudinal shapes 3 communicates through a first end 3a with a distributor duct 6 and through a second end 3b with a collector duct 7 thus forming a circuit for said heat carrying fluid A, said circuit generally being a closed circuit, as will be seen later on, with an inlet 6a into said distributor duct 6 and an outlet 7a out of said collector duct 7. The circulation of the heat carrying fluid A through said circuit is indicated by arrows in Fig. 1.

The distributor duct 6 and the collector duct 7 are also designed in such a way that they are structural bearing members serving as rests for the plate members 1 forming the collector surface with the integrated longitudinal shapes 3, said ducts possibly resting at their ends on struts 80 or loadbearing walls.

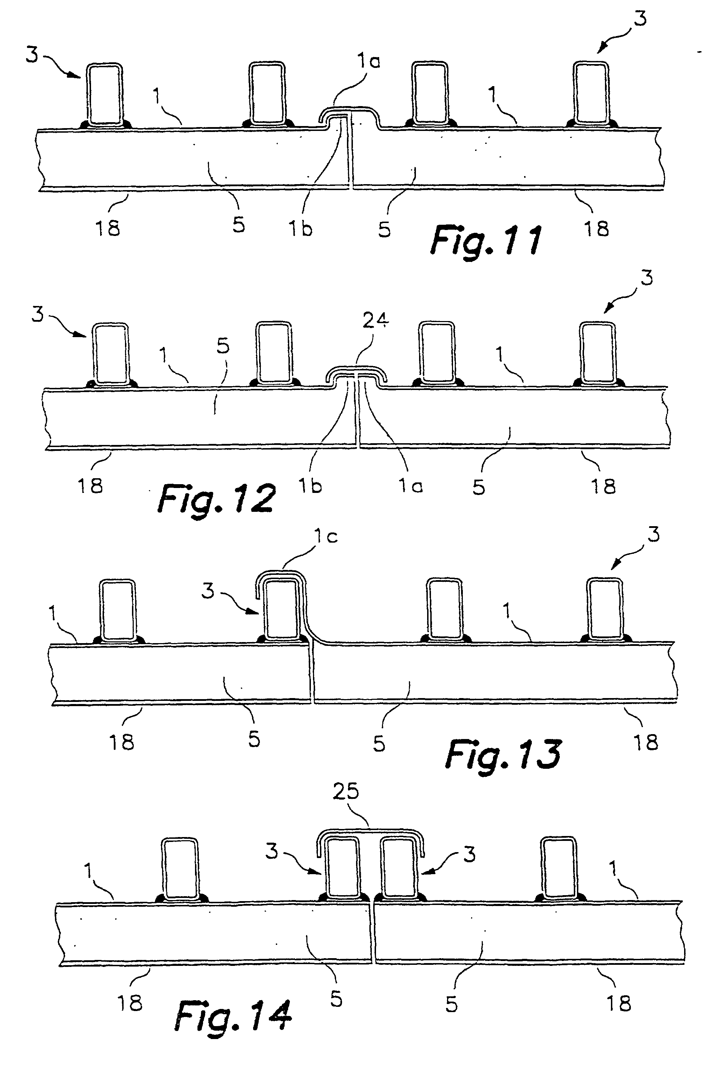

A layer 5 of a heat-insulating material is preferably applied as a lining to the surface not exposed to the solar radiation of said roofing, and if said layer is supposed to be visible it can be finished with a finishing plate or sheet 18 as is shown in Figs. 11 through 14.

Plate members 1 fulfil the functions of waterproofing the building and collecting the solar energy. The material used to make them is selected from the group comprising stainless steel, zinc-plated or lacquered steel, copper, aluminium or any other nonmetallic material having the characteristic of being heat-conductive, of those usually employed in roofing. The outside surface is of dark colour, preferably black, in order to thus improve the sunbeam energy pickup.

Longitudinal shapes 3 as well as distributor and collector ducts 6 and 7 fulfil a double function: on the one hand they constitute totally or partially self-supporting, rigidizing structural members of the roofing, and on the other hand they form ductings for the heat carrying fluid A. The material of the longitudinal shapes 3 and distributor and collector ducts 6 and 7 can be any of the already mentioned stainless steel, zinc-plated or lacquered steel, copper, aluminium or any other nonmetallic material having the characteristic of being heat-conductive. It is nevertheless important that if different materials are selected for said ducts and for the roofing plate the paired materials selected do not create high galvanic couples, since these latter are the cause of serious corrosion problems.

The function of the layer 5 of heat-insulating material is to heat-insulate the collector plate members and the longitudinal sections 3 fitted to them thus preventing the collector system from loosing heat energy, said layer 5 also functioning to thermally and acoustically insulate the building as is otherwise usual. The material of the heat-insulating layer 5 is selected from the group consisting of glass wool mat, rock wool, polyurethane foam or any other material of similar characteristics of those usually employed in the building industry.

The fluid A used as heat carrier is selected from the group formed by tap water, deionized water or water treated with corrosion inhibitors and/or antifreeze, heat-transfer oil, air or any other fluid being appropriate for the specific application contemplated. The nature of said fluid A will determine the dimensions and materials characteristic of the longitudinal sections 3, distributor and collector ducts 6 and 7 and further lines of the system, and the conditions for their maintenance.

In order to optimize the manufacture, checking and erection said roofing is formed by one or more connectable panels as per the present invention. The roofing obtained with said panels is basically operated as per the same principles and is made of the same materials as set forth with respect to the roofing of Fig. 1.

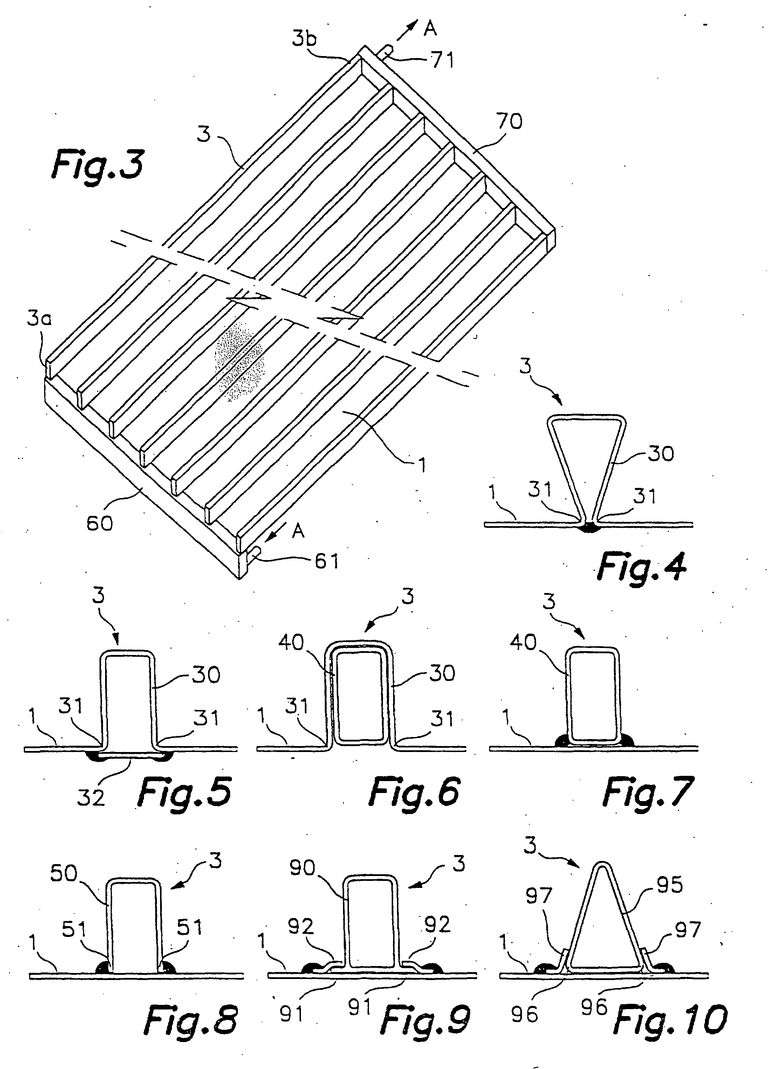

In Fig. 2 is shown schematically a plan-view of a solar energy collector roofing formed from several of said panels as per the present invention, and Fig. 3 shows in a perspective view one of said panels.

Each of said panels compbises a heat-conductive, waterproof plate member 1 forming said solar radiation pickup surface. Hollow, longitudinal shapes 3 forming channels for a heat carrying fluid A are attached to or integral with said plate member 1, each of said longitudinal shapes 3 comprising a first end 3a and a second end 3b. At opposite ends of the plate member 1 and arranged as per a transversal arrangement with respect to the longitudinal shapes 3 are attached a tube 60 functioning as a distributor duct and a tube 70 functioning as a collector duct, said first ends 3a and said second ends 3b of the longitudinal shapes 3 being connect to and communicating with said tubes 60 and 70, respectively, thus forming for said heat carrying fluid A a subcircuit specifically pertaining to said panel, with an inlet 61 into said tube 60 and an outlet 71 out of said tub 70, said specific subcircuit being apt to form part of a general circuit that can be either open or closed.

The panel has been designed in such a way that each plate member 1 together with said longitudinal shapes 3 and tubes 60, 70 forms a rigid assembly that is apt to totally or in great part stand the stressing created by the design load of said roofing corresponding to the roofing surface area covered by said panel. To illustrate this fact Fig. 2 shows several panels arranged as per a mutually adjacent arrangement and resting at the ends of the tubes 60, 70 on struts 80. In this example each strut supports the ends of two adjacent panels.

As in Fig. 1, the flow of the heat carrying fluid A through the specific circuit pertaining to each panel is indicated by arrows. It is evident that all of the inlets 61 can come from different branchings of a single inlet duct (not shown), just as all of the outlets 71 can assemble into a single outlet duct (not shown), or both the inlets 61 and the outlets 71 can join in groups to connect with the rest of an open or closed circuit, or each inlet 61 and each outlet 71 can connect with an individual open or closed circuit.

If this is deemed convenient, the panel as per the instant invention does besides comprise a layer 5 of heat-insulating material such as a foamed polymer or copolymer, fibreglass or the like lining that surface of the plate member 1 which is not exposed to the solar radiation, and especially if said layer 5 is to be visible said panel does also comprise as finishing plate or sheet 18 lining the open surface of said layer 5 of heat-insulating material (Figs. 10 through 13).

The panel does also preferably comprise for said tubes 60, 70 a lining of heat-insulating material (not shown) such as a foamed polymer or copolymer, fibreglass or the like in order to reduce the heat losses from said tubes.

The panel of the present invention is designed for mass production and can be carried out as per different embodiments as will be explained later on. It is important to point out that all those connections which have to form tight enclosures for the subcircuit conducting the heat carrying fluid and specifically pertaining to the panel, i.e. the connections to form or integrate the longitudinal shapes 3 with the plate member 1 and the connections of the first and second ends 3a and 3b of the longitudinal shapes 3 to the tubes 60, 70 are tight connections carried out by welding, by means of an adhesive or through the use of other similar procedures such as form fit bead-jointing or through a combination of several of said procedures, said connections being checked as for their strength and tightness hence meeting the reliability requirements demanded by the insurance companies thus offering a given guarantee to the buyer. In some exemplary embodiments in which the longitudinal shapes 3 are tubular members 40 (see Fig. 6) the attachment between said tubular members 40 and the plate member 1 is carried out by totally or partially inserting the former in a pressed-in fit into channels 30 formed in the plate member 1, without ulterior welding or use of adhesive. In another exemplary embodiment, not shown, the tubular members are simply applied onto the plate member, and the assembly is ulteriorly lined with the corresponding layer of heat-insulating material, this heat-insulating layer being for example sprayed on thus assuring the attachment between said members.

Although the plate members and the panels can be tailor made for a specific construction, in order to lower the costs they are preferably mass produced with several standard dimensions the most common of them being of approximately 1.5 x 3 mtrs., although they can go up to approx. 2 x 6 mtrs. Nevertheless, in some exemplary embodiments much bigger lengths can be obtained, the panels being rolled from a sheet coil. These cases will nevertheless probably require intermediary bearing struts to support the installed facility.

Figs. 4 through 10 show several alternative examples for the integration or attachment of the longitudinal shapes 3 with or to the plate member 1 to form part of a panel or directly of a roofing.

It is to be pointed out that in the figures illustrating the present specification the thicknesses of the plates, the connections, the gaps and other similar aspects have been exaggerated in order to provide for a better understanding of the drawing.

In the examples of Figs. 4 and 5 said longitudinal shapes 3 are formed, at least in part, from the very material of the plate member 1 by means of a forming operation carried out upon said plate member 1 at several spaced regions to thus determine longitudinal channels 30 delimited by lateral edges 31, said channels 30 being thereupon closed through joining said lateral edges 31. Whereas now in the example of Fig. 4 said closure of the channels 30 is carried out by joining the directly adjoining lateral edges 31, in the example of Fig. 5 said joining of the spaced lateral edges 31 is carried out by means of an added member 32 joining them.

In the example of Fig. 6 plate member 1 has also been formed with channels 30 delimited by edges 31, but instead of being closed said channels are provided to totally or partially house tubular members 40 in their inside. The opening delimited by said edges 31 is advantageously narrower than the bottom of channel 30, a clamping effect thus taking place which retains the pressed-in tubular member 40 without requiring an ulterior fixation. Channels 30 can be of very small depth just enough to mark the location of the tubular members 40, or they can even disappear, in which cases there would be sprayed on the above mentioned layer 5 of heat-insulating material giving cohesiveness to the panel.

In the example of Fig. 7 said hollow, longitudinal shapes 3 are formed by said tubular members 40 directly attached to any of the surfaces of said heat-conductive plate member 1 by means of spotwelds or weld beads or adhesive spots or beads.

In the example of Fig. 8 said hollow, longitudinal shapes 3 are formed by members 50 of heat-conductive material and "U" cross-section attached to said heat-conductive plate of plate member 1 at the edges 51 of the ends of its legs.

In the previous examples of Figs. 4, 5, 7 and 8 the attachments can be carried out by means of an adequate technique guaranteeing the structural attachment and when needed the tightness of the member, such as by welding or by means of an adhesive.

In their turn in the examples of Figs. 9 and 10 the hollow, longitudinal shapes 3 are formed by tubular members 90, 95 having a given configuration of their cross-section which is apt to be form-fitted to guides formed with plate member 1 or attached to it. In the example of Fig. 9 tubular member 90 has at its bottom flanges 91 fitting into guides formed by guide members 92 attached to plate member 1. In the example of Fig. 10 tubular member 95 has a triangular cross-section arranged with its base resting on plate member 1 and having its vertices 93 adjacent to the base grasped by guide members 97 attached to plate member 1.

In these two last examples guide members 92, 97 can be sections covering the whole extension of tubular members 90, 95, or they can be discrete, possibly very short, aligned and sensibly spaced sections defining said guides. When as in the examples of Figs. 9 and 10 said guides are not obtained through a forming of plate member 1, the attachment of guide members 92, 97 to plate member 1 can be carried out by means of any adequate technique, such as by welding or by means of adhesive.

One particularity of the examples of Figs. 6, 9 and 10 lies in the fact that the tubular members 90, 95 can preferably forcibly slide along the guides formed by the respective guide members 91, 96, and therefore are easily assemblable and disassemblable.

In another order of things, both in the roofing of Fig. 1 and in the panels of Figs. 2 and 3 the plate members 1 besides comprise arrangements provided at their longitudinal edges to facilitate the connection with other adjacent plate members 1 thus establishing waterproof connections. Said arrangements generally adopt an adequate shape apt to allow a proper fit.

Figs. 11 through 14 show several alternative examples of how the plate members 1 are laterally fitted to each other both if they do as well as if they do not integrate a panel.

In the example of Fig. 11 said mutual connection of said plate members 1 is carried out by way of an overlap connection wherein a first flange 1a adjacent to a lateral edge of one of said plate members 1 overlaps a second flange 1b adjacent to an adjoining lateral edge of another of said plate members 1 arranged as per a contiguous arrangement with respect to the first mentioned one.

In the example of Fig. 12 said connection is carried out by way of an overlap connection wherein a member 24 overlaps a first flange 1a adjacent to a lateral edge of one of said plate members 1 and a second flange 1b adjacent to an adjoining lateral edge of another of said plate members 1 arranged as per a contiguous arrangement with respect to the first mentioned one, said overlapping member thus covering the gap between both contiguous plate members 1.

In the example of Fig. 13 said connection is carried out by way of an overlap connection wherein a first flange 1c adjacent to a lateral edge of one of said plate members 1 overlaps a longitudinal shape 3 adjacent to an adjoining lateral edge of another of said plate members 1 arranged as per a contiguous arrangement with respect to the first mentioned one.

Lastly in the example of Fig. 14 said connection is carried out by way of an overlap connection wherein a member 25 overlaps two longitudinal shapes 3 each belonging to each of the adjoining plate members 1 to be connected and being adjacent to the lateral edges of these latter, in such a way that said member 25 covers the gap between both contiguous plate members 1.

As is obvious, when the plate members 1 of the examples of Figs. 11 and 13 incorporate said layer 5 of insulating material, as in the illustrated case, said respective flanges 1a and 1c are free of said layer 5 of insulating material.

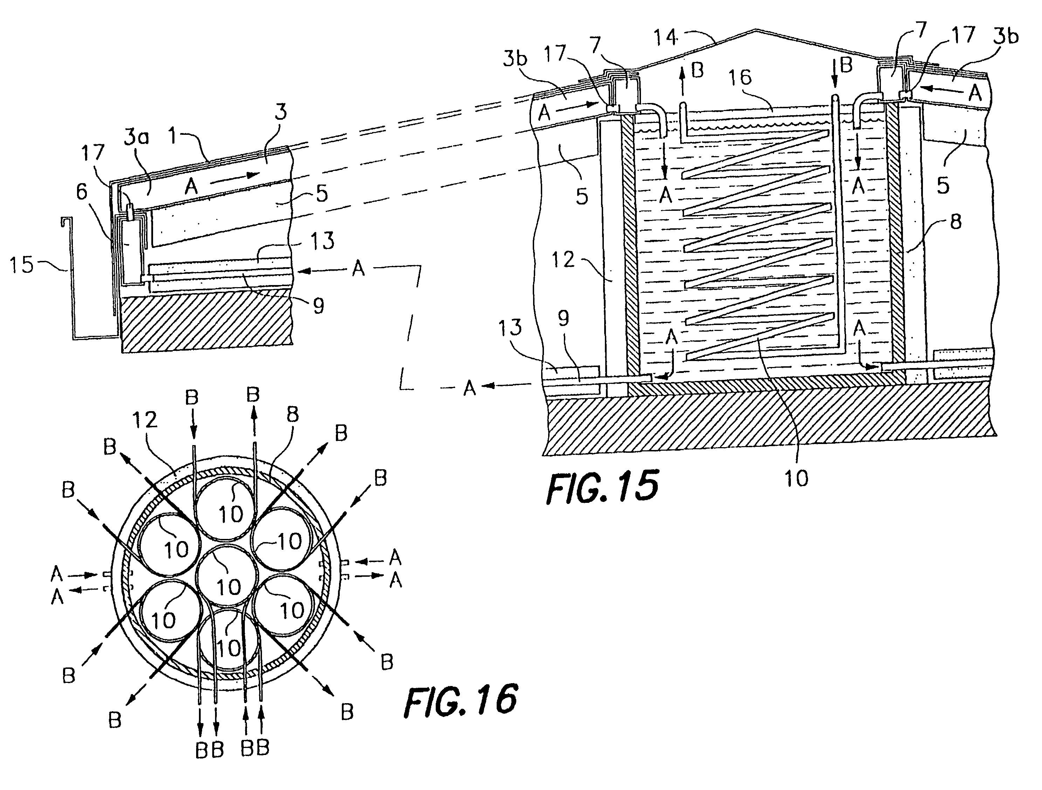

Referring now to Fig. 15 here is shown schematically in a local cross-section a saddle roof carried out as per the present invention. Each of the slopes is formed by a plurality of heat-conductive, waterproof plate members 1 with the corresponding longitudinal shapes 3 with ends 3a and 3b respectively connected to a distributor duct 6 and a collector duct 7 arranged as per a transversal arrangement. The distributor duct 6 is situated at the end placed at a lower level of the slope, whereas the collector duct 7 is situated at the end placed at a higher level. In the illustrated exemplary embodiment the connections between the longitudinal shapes 3 and the distributor and collector ducts 6 and 7 are carried out as plug-in connections wherein rigid couplings 17 integral with one of the parts are pressed into corresponding orifices equipped with a seal and provided in the other part. Said connections can also be carried out by means of elastic couplings fixed at their ends to corresponding nipples integral with each of the parts. If said panels are prefabricated panels said connections are permanent and are carried out through welding, use of adhesive, etc., and they are duly checked before commercializing said panels.

A preferably heat-insulated tank 8 situated at a central location of the roofing, i.e. between the two slopes and at a level lower than, equal to or higher than that of the collector duct 7 forms a heat-exchange section whose function will be explained later on. In the illustrated example said tank 8 besides fulfils a structural function since it serves as a bearing strut for the collector duct 7.

The system comprises for each slope a primary circuit for a heat carrying fluid A, formed by the longitudinal shapes 3 and the distributor and collector ducts 6 and 7 of the roofing, and a secondary circuit distributing the hot water to the house. The heat transfer between the primary circuit and the secondary circuit takes place in said heat-exchange section, i.e. in the inside of tank 8.

In a same roofing there can evidently be more than one of said heat-exchange sections, including more than one tank 8.

Said tank is generally not pressurized, i.e. it communicates with the atmosphere and therefore is at atmospheric pressure, for which reason the heat carrying fluid A filling said tank is subject to small evaporation losses. To compensate said losses an automatic system (not shown) has been provided to refill the tank with fluid A as per a preselected filling level, such as by means of a float-actuated valve system, in order to keep said level constant.

Tank 8 is permanently filled with heat carrying fluid A circulating through the primary circuit. In effect, said heat carrying fluid A, warmed up by the insolation impinging upon plate members 1 and longitudinal shapes 3 of the roofing, passes once warm from collector duct 7 to the inside of tank 8 through the top of said tank to later on leave this latter, once cooled by the heat pickup effected by the heat-exchange water of the secondary circuit, through the bottom of said tank 8 through a duct 9, to again progress towards the roofing to enter it through the distributor duct 6 thus reinitiating the closed circuit solar energy pickup cycle. It is to be pointed out that although the tank 8 is permanently filled with the heat carrying fluid A such fluid is being continuously renewed since it flows as per a descending endless flow. Such flow is normally produced by the convection of the very heat carrying fluid A (thermosyphonic circulation), although it can be assisted, if such a thing is deemed necessary, by a pump (nor shown). As has been mentioned above, said pump can be driven by an alternating-current electric motor fed from the mains supplying the building, or it can be advantageously driven by a direct-current electric motor fed from a photovoltaic module station picking up the solar radiation energy and situated in an adequate area of the roofing.

The cold water B of the secondary circuit enters in its turn said heat-exchange section of the inside of tank 8 through the bottom of coil 10 and flows upwards through this latter as it gradually warms up as it picks up the heat released by the heat carrying fluid A present in said tank, said water once warmed up and ready for consumption exiting said heat-exchange section through the top of said coil 10.

If due to the use of the building, such as for example in the case of a building with several living quarters, it is desirable to have several independent secondary circuits one only heat-exchange section can be installed consisting in a tank 8 as that illustrated in Fig. 16 communicating with one or more primary circuits of heat carrying fluid A corresponding, for example, to one or more slopes of a roofing as per the invention but housing several, in the illustrated example seven, coils 10 with their corresponding inlets for the cold water B and outlets for the warm water B.

Referring to Figs. 15 and 16 it is to be pointed out that in order to prevent heat losses it is convenient to heat-insulate as much as possible all parts of both the primary and secondary circuits. The layer 5 of heat-insulating material is thus arranged underneath the plate members 1 and longitudinal shapes 3 of the roofing. Tank 8 has an outer lining 12 and a cover 16 both made of heat-insulating material, and ducting 9 has a heat-insulating layer 13. Obviously other elements such as for example the distributor and collector ducts 6 and 7 and line sections of the secondary circuit outside the tank 8 can also advantageously be heat-insulated in spite of this not having been illustrated in the figures.

The roofing is completed with several accessory elements such as a rain gutter 15 adjacent to the lowest level edge of each slope of the roofing, and a ridge cap member 14 fixed at the highest part of the roofing and covering in a waterproof arrangement the area of the tanks 8 and the highest ends of each slope.

## Claims

1. A solar energy collector roofing for buildings of the type comprising a solar radiation pickup surface, provided to replace the roof, obtained from one o more heat-conductive, waterproof plate members (1) apt to be connected to each other thus establishing waterproof connections, and a plurality of channels formed by hollow longitudinal shapes (3) attached to or integrating said plate member(s) (1), said channels forming part of an open or closed circuit including one distributor duct (6) and at least one collector duct (7) to which said channels are communicating through its respective ends (3a, 3b), a heat carrying fluid (A) flowing through said circuit; **characterised in that**:
said channels forming hollow longitudinal shapes (3) are at least in part directly exposed to the sun radiation; and
all the members comprised in the roofing, namely said waterproof plate members (1) and said channels forming hollow longitudinal shapes (3), carry out a double function:
on one hand a structural function as a support for the roof; and
on the other hand an energy collecting function as solar radiation
pickup surface and ducts for said heat carrying fluid (A) respectively, constituting together structural strengthening elements of the roof, being able to totally or in great part stand the design load stressing of said roofing.

2. A roofing as per claim 1, **characterised in that** said distributor duct (6) and collector duct (7) accomplish also a structural function as a support for the roof.

3. A roofing as per claim 1, **characterised in that** said hollow, longitudinal shapes (3) comprise tubular members (40) attached to said plate member (1) by welding or through the use of adhesive.

4. A roofing as per claim 1, **characterised in that** said hollow, longitudinal shapes (3) are formed, at least in part, from the very material of said heat-conductive, waterproof plate member (1) by means of:
a forming operation carried out upon said plate member (1) at several spaced regions to thus determine longitudinal channels (30) delimited by lateral edges (31); and
closing said channels (30) through joining said lateral edges (31).

5. A roofing as per claim 1, **characterised in that** said hollow, longitudinal shapes (3) are formed by members (50) of heat-conductive material and open cross-section, such as a "U" cross-section, attached to said heat-conductive plate member (1) at the edges (51) of the ends of its legs.

6. A roofing as per claim 1, 2, 3, 4 or 5, **characterised in that** said plate member (1) besides comprises attached to it through welding and/or through the use of adhesive:
a tube (60) functioning as said distributor duct (6) to which said first ends (3a) of the longitudinal shapes (3) are connected; and
a tube (70) functioning as said collector duct (7) to which said second ends (3b) of the longitudinal shapes (3) are connected;
in such a way that a circuit is formed for said heat carrying fluid (A) which specifically pertains to said plate member (1), with an inlet (61) into said tube (60) functioning as said distributor duct (6) and an outlet (71) out of said tube (70) functioning as said collector duct (7), said circuit being apt to form part of said open or closed circuit.

7. A roofing as per claim 1, 2, 3, 4, 5 or 6, **characterised in that** said plate member (1) does besides comprise:
a layer (5) of heat-insulating material such as a foamed polymer or copolymer, fiberglass, etc. lining its surface not exposed to the solar radiation, said layer of heat-insulating material also lining where applicable those walls of the longitudinal shapes (3) present in said surface; and
a finishing plate or sheet (18) lining the open surface of said layer (5) of heat-insulating material.

8. A roofing as per claim 4, **characterised in that** said closure of the channels (30) is carried out by joining said directly adjoining lateral edges or said spaced lateral edges (31) by means of an added member (32).

9. A roofing as per claim 4, 5 or 8, **characterised in that** said attachment and/or joining is carried out through welding or through the use of an adhesive, said adhesive possibly being totally or partially formed by a layer of heat insulating material covering that surface of the assembly which is not exposed to the solar radiation.

10. A roofing as per claim 1, **characterised in that** it includes a layer (5) of heat-insulating material such as foamed polymer or copolymer, fiberglass or the like lining the surface not exposed to the solar radiation of the assembly formed by the plate members (1), said layer being applied after the erection of said roofing by means of a lining procedure such as by plate fastening or spraying, with or without a finishing plate or sheet (18) lining the open surface of said layer (5) of heat-insulating material.

11. A roofing as per claim 1, **characterised in that** it comprises one only distributor duct (6) and one only collector duct (7) for several of said plate members (1), said connection between the first ends (3a) of the longitudinal shapes (3) and said distributor duct (6) and between said second ends (3b) of the longitudinal shapes (3) and said collector duct (7) being carried out as a plug-in connection, a screw-in connection or an equivalent tight connection wherein rigid couplings (17) integral with one of the parts are pressed or screwed into or otherwise tightly connected with corresponding orifices equipped with a seal and provided in the other part, or by means of elastic couplings fixed at their ends to corresponding nipples integral with each of the parts.

12. A roofing as per claim 1, **characterised in that** said circuit for the heat carrying fluid (A), of which distributor duct (6), longitudinal shapes (3) and collector duct (7) form part, is a closed primary circuit including at least one heat-exchange section comprising at least a tank (8), jacketed with a layer (12) of heat-insulating material, for a secondary circuit fluid, said at least one tank (8) carrying out a further function as structural support of the roof by totally or partially supporting the collector duct (7).

13. A panel integrating a solar energy collector roofing for buildings, said roofing being of the type comprising a solar radiation pickup surface provided to replace a portion of the roof obtained from one heat-conductive, waterproof plate member (1) apt to be connected to other similar plate members of adjacent panels thus establishing waterproof connections, and a plurality of channels formed by hollow longitudinal shapes (3) attached to or integrating said plate member(s) (1), said channels forming part of an open or closed circuit including one distributor duct (6) and at least one collector duct (7) to which said channels are communicating through its respective ends (3a, 3b), a heat carrying fluid (A) flowing through said circuit; **characterised in that**:
at opposed ends of said plate member (1) a tube (60) functioning as said distributor duct (6) and a tube (70) functioning as said collector duct (7) are attached and communicating with said channels through its respective ends (3a, 3b) thus forming a sub-circuit for said heat carrying fluid (A) specifically pertaining to said panel, with an inlet (61) into said tube (60) and an outlet (71) out of said tube (70), said specific sub-circuit being apt to form part of a general circuit that can be either open or closed, wherein
said channel forming hollow longitudinal shapes (3) are at least in part directly exposed to the sun radiation, and
all the main members comprised in the panel, namely said waterproof plate members (1), said channel forming hollow longitudinal shapes (3) and said tubes (60, 70) carry out a double function:
on one hand a structural function as a support for the roof; and
on the other hand an energy collecting function as solar radiation
pickup surface and ducts for said heat carrying fluid (A) respectively, constituting all together a rigid assembly being able to totally or in great part stand the design load stressing of said roofing corresponding to the roofing surface area formed by said panel.

14. A panel as per claim 13, **characterised in that** it does beside comprise a layer (5) of heat-insulating material such as a foamed polymer or copolymer, fiberglass or the like lining that surface of the plate member (1) which is not exposed to the solar radiation, and if said layer (5) of heat-insulating material is to be visible a finishing plate or sheet (18) lining the open surface of the former is preferably included.

15. A panel as per claim 13, **characterised in that** it does besides comprise a lining of heat-insulating material such as a foamed polymer or copolymer, fiberglass or the like for said tubes (60, 70).

16. A panel as per claim 13, **characterised in that** both said attachments to form or integrate the longitudinal shapes (3) with the plate member (1) and the attachments between the plate member (1) and the tubes (60, 70) and the connections of the first and second ends (3a) and (3b) of the longitudinal shapes (3) to the tubes (60, 70) are attachments and connections carried out through welding, through the use of an adhesive, through bead-jointing, through form fit or through combinations of these techniques, said attachments and connections being tight at the closures of said circuit for said heat carrying fluid (A).

## Patentansprüche

1. Solarwärmekollektordach für Gebäude mit einer Fläche zur Aufnahme der Sonnenstrahlung, das das Dach ersetzen soll und sich zusammensetzt aus einem oder mehreren wärmeleitenden, wasserdichten Plattenelementen (1), die miteinander verbunden werden können, wodurch wasserdichte Verbindungen entstehen, sowie mehreren aus hohlen, länglichen Formstücken (3) hergestellten Kanälen, die an den Plattenelementen (1) befestigt oder darin integriert sind, wobei die Kanäle Teil eines offenen oder geschlossenen Kreislaufs mit einem Verteilerleitung (6) und mindestens einer Kollektorleitung (7) sind, mit denen die Kanäle über ihre jeweiligen Enden (3a, 3b) kommunizieren, wobei durch den Kreislauf eine wärmeübertragende Flüssigkeit (A) fließt, **dadurch gekennzeichnet, dass**:
dass die aus den hohlen, länglichen Formstücken (3) hergestellten Kanäle zumindest teilweise der Sonnenstrahlung ausgesetzt sind; und
alle im Dach vorhandenen Elemente, nämlich die wasserdichten Plattenelemente (1) und die aus den hohlen, länglichen Formstücken (3) hergestellten Kanäle eine zweifache Funktion ausüben:
einerseits eine strukturelle Funktion als Stütze für das Dach; und
andererseits eine energiesammelnde Funktion als Fläche zur Aufnahme von Sonnenstrahlung bzw. Leitungen für die wärmeübertragende Flüssigkeit (A), die zusammen die Verstärkungselemente des Dachs darstellen und vollständig oder zu einem großen Teil die Auslegungsbelastung des Dachs aushalten.

2. Dach nach Anspruch 1, **dadurch gekennzeichnet, dass** die Verteilerleitung (6) und die Kollektorleitung (7) auch eine strukturelle Funktion als Stütze für das Dach ausüben.

3. Dach nach Anspruch 1, **dadurch gekennzeichnet, dass** die hohlen, länglichen Formstücke (3) rohrförmige Elemente (40) aufweisen, die am Plattenelement (1) durch Schweißen oder mit Hilfe eines Klebers befestigt sind.

4. Dach nach Anspruch 1, **dadurch gekennzeichnet, dass** die hohlen, länglichen Formstücke (3) zumindest teilweise aus dem gleichen Material wie die wärmeleitenden, wasserdichten Plattenelemente (1) hergestellt sind, und zwar:
durch einen Formgebungsschritt, der an dem Plattenelement (1) an mehreren voneinander beabstandeten Bereichen unter Bildung von durch seitliche Kanten (31) begrenzten Längskanälen (30) durchgeführt wird, sowie
Verschließen der Kanäle (30) durch Verbinden der seitlichen Kanten (31).

5. Dach nach Anspruch 1, **dadurch gekennzeichnet, dass** die hohlen, länglichen Formstücke (3) aus Elementen (50) aus wärmeleitenden Material mit offenem Querschnitt, wie z.B. einem "U"-Querschnitt hergestellt sind, die an dem wärmeleitenden Plattenelement (1) an den Kanten (51) der Fußenden befestigt sind.

6. Dach nach Ansprüchen 1, 2, 3, 4 oder 5, **dadurch gekennzeichnet, dass** an dem Plattenelement (1) außerdem durch Schweißen und/oder mit Hilfe eines Klebers:
ein Rohr (60), das als Verteilerleitung (6) fungiert, mit der die ersten Enden (3a) der länglichen Formstücke (3) verbunden sind; sowie
ein Rohr (70), das als Kollektorleitung (7) fungiert, mit der die zweiten Enden (3b) der länglichen Formstücke (3) verbunden sind;
so befestigt sind, dass ein Kreislauf für die wärmeübertragende Flüssigkeit (A) entsteht, der spezifisch zum Plattenelement (1) gehört, mit einer Einlassöffnung (61) in das als Verteilerleitung (6) fungierende Rohr (60) und einer Auslassöffnung (71) aus dem als Kollektorleitung (7) fungierenden Rohr (70), wobei der Kreislauf Teil des offenen bzw. geschlossenen Kreislaufs sein kann.

7. Dach nach Ansprüchen 1, 2, 3, 4, 5 oder 6, **dadurch gekennzeichnet, dass** das Plattenelement (1) außerdem folgendes aufweist:
eine Schicht (5) aus wärmeisolierendem Material, wie z.B. aus Polymer- oder Copolymerschaumstoff, Fiberglas usw., mit der die nicht der Sonnenstrahlung ausgesetzte Fläche verkleidet ist, wobei mit der Schicht aus wärmeisolierendem Material auch gegebenenfalls die auf dieser Fläche vorhandenen Wände der länglichen Formstücke (3) verkleidet sind; sowie
eine Endplatte bzw. ein Endblech (18), die bzw. das die offene Fläche der Schicht (5) aus wärmeisolierendem Material verkleidet.

8. Dach nach Anspruch 4, **dadurch gekennzeichnet, dass** das Verschließen der Kanäle (30) durch Verbinden der unmittelbar benachbarten seitlichen Kanten oder der beabstandeten seitlichen Kanten (31) mit Hilfe eines hinzugefügten Elements (32) erfolgt.

9. Dach nach Anspruch 4, 5 oder 8, **dadurch gekennzeichnet, dass** das Befestigen und/oder Verbinden durch Schweißen oder mit Hilfe eines Klebers erfolgt, wobei der Kleber gegebenenfalls vollständig oder teilweise aus einer Schicht aus wärmeisolierendem Material besteht, die die der Sonnenstrahlung nicht ausgesetzte Fläche des Aufbaus bedeckt.

10. Dach nach Anspruch 1, **dadurch gekennzeichnet, dass** es außerdem eine Schicht (5) aus wärmeisolierendem Material, wie z.B. aus Polymer- oder Copolymerschaumstoff, Fiberglas oder dgl., aufweist, mit der die nicht der Sonnenstrahlung ausgesetzte Fläche des aus den Plattenelementen (1) bestehenden Aufbaus verkleidet ist, wobei das Auftragen der Schicht nach dem Zusammenbau des Dachs mittels einers Verkleidungsverfahrens, wie z.B. durch Plattenbefestigung oder Aufsprühen, mit oder ohne eine die offene Fläche der Schicht (5) aus wärmeisolierendem Material bedeckende Endplatte bzw. Endblech (18) erfolgt.

11. Dach nach Anspruch 1, **dadurch gekennzeichnet, dass** es nur eine Verteilerleitung (6) und nur eine Kollektorleitung (7) für mehrere der Plattenelemente (1) aufweist, wobei die Verbindung zwischen den ersten Enden (3a) der länglichen Formstücke (3) und der Verteilerleitung (6) sowie zwischen den zweiten Enden (3b) der länglichen Formstücke (3) und der Kollektorleitung (7) als eine aufsteckbare Verbindung, aufschraubbare Verbindung oder eine gleichwertige dichte Verbindung ausgeführt ist, bei der starre, mit einem der Teile fest verbundene Kupplungen (17) in mit einer Dichtung versehene und in dem anderen Teil vorhandene, entsprechende Öffnungen eingedrückt, eingeschraubt oder auf andere Weise dicht damit verbunden werden oder bei der die dichte Verbindung mit Hilfe von elastischen Kupplungen, die an ihren Enden mit entsprechenden, mit beiden Teilen fest verbundenen Nippeln befestigt sind, erfolgt.

12. Dach nach Anspruch 1, **dadurch gekennzeichnet, dass** es sich dei dem Kreislauf für die wärmeübertragenden Flüssigkeit (A), von dem die Verteilerleitung (6), die länglichen Formstücke (3) und die Kollektorleitung (7) ein Bestandteil sind, um einen Primärkreislauf . mit mindestens einem Wärmeaustauschabschnitt mit mindestens einem Behälter (8), der eine Ummantelung aus einer Schicht (12) aus wärmeisolierendem Material aufweist, für eine Flüssigkeit des Nebenkreislaufs handelt, wobei zumindest ein Behälter (8) eine weitere Funktion als strukturelle Stütze für das Dach ausübt, indem dieser vollständig oder teilweise die Kollektorleitung (7) stützt.

13. Paneele, in die ein Solarwärmekollektordach für Gebäude integriert ist, mit einer Fläche zur Aufnahme der Sonnenstrahlung, das das Dach z.T. ersetzen soll und sich zusammensetzt aus einem oder mehreren wärmeleitenden, wasserdichten Plattenelementen (1), die mit anderen, ähnlichen Plattenelementen benachbarter Paneele verbunden werden können, wodurch wasserdichte Verbindungen entstehen, sowie mehreren aus hohlen, länglichen Formstücken (3) hergestellten Kanälen, die an den Plattenelementen (1) befestigt oder darin integriert sind, wobei die Kanäle Teil eines offenen oder geschlossenen Kreislaufs mit einer Verteilerleitung (6) und mindestens einer Kollektorleitung (7) sind, mit denen die Kanäle über ihre jeweiligen Enden (3a, 3b) kommunizieren, wobei durch den Kreislauf eine wärmeübertragende Flüssigkeit (A) fließt, **dadurch gekennzeichnet, dass**:
an entgegengesetzten Enden des Plattenelements (1) ein als Verteilerleitung (6) fungierendes Rohr (60) und ein als Kollektorleitung (7) fungierendes Rohr (70) befestigt sind und mit den Kanälen über ihre jeweiligen Enden (3a, 3b) kommunizieren, wodurch ein Nebenkreislauf für die wärmeübertragende Flüssigkeit (A) entsteht, der spezifisch zu dieser Paneele gehört, mit einer Einlassöffnung (61) in das Rohr (60) und einer Auslassöfnnung (71) aus dem Rohr (70), wobei der spezifische Nebenkreislauf Teil eines allgemeinen Kreislaufs sein kann, der entweder offen oder geschlossen sein kann, wobei
die aus den hohlen, länglichen Formstücken (3) hergestellten Kanäle zumindest teilweise der Sonnenstrahlung unmittelbar ausgesetzt sind; und
alle in der Paneele vorhandenen Hauptelemente, nämlich die wasserdichten Plattenelemente (1), die aus den hohlen, länglichen Formstücken (3) hergestellten Kanäle sowie die Rohre (60, 70) eine zweifache Funktion ausüben:
einerseits eine strukturelle Funktion als Stütze für das Dach; und
andererseits eine energiesammelnde Funktion als Fläche zur Aufnahme von Sonnenstrahlung bzw. Leitungen für die wärmeübertragende Flüssigkeit (A), die alle zusammen einen starren Aufbau darstellen, der vollständig oder zu einem großen Teil die Auslegungsbelastung des Dachs entsprechend der durch die Paneele gebildeten Dachfläche aushalten.

14. Paneele nach Anspruch 13, **dadurch gekennzeichnet, dass** sie außerdem eine Schicht (5) aus wärmeisolierendem Material, wie z.B. aus Polymeroder Copolymerschaumstoff, Fiberglas oder dgl., aufweist, mit der die nicht der Sonnenstrahlung ausgesetzte Fläche des Plattenelements (1) verkleidet ist, wobei für den Fall, dass die Schicht (5) aus wärmeisolierendem Material sichtbar sein soll, vorzugsweise eine Endplatte bzw. ein Endblech (18) mit verwendet wird, die bzw. das die offene Fläche bedeckt,

15. Paneele nach Anspruch 13, **dadurch gekennzeichnet, dass** sie außerdem eine Verkleidung aus wärmeisolierendem Material, wie z.B. aus Polymeroder Copolymerschaumstoff, Fiberglas oder dgl., für die Rohre (60, 70) aufweist,

16. Paneele nach Anspruch 13, **dadurch gekennzeichnet, dass** es sich bei beiden Befestigungen, mit denen die länglichen Formstücke (3) an dem Plattenelement (1) befestigt bzw. darin integirert werden, und den Befestigungen zwischen dem Plattenelement (1) und den Rohren (60, 70) sowie den Verbindungen der ersten und zweiten Enden (3a) und (3b) der länglichen Formstücke (3) mit den Rohren (60, 70) um Befestigungen und Verbindungen handelt, die durch Schweißen, mit Hilfe eines Klebers, durch eine Wulstverbindung, Formpassung oder eine Kombination dieser Techniken erfolgen, wobei die Befestigungen und Verbindungen an den Verschlüssen des Kreislaufs für die wärmeübertragenden Flüssigkeit (A) dicht sind.

## Revendications

1. Couverture collectrice d'énergie solaire pour bâtiments du genre comprenant une surface pour recevoir la radiation solaire , servant à remplacer le toit, obtenue d'un ou plusieurs membres (1) de plaque imperméable à l'eau, conducteurs de la chaleur adaptés pour être reliés entre eux en établissant ainsi des connexions imperméables à l'eau et une pluralité de rigoles formées par des configurations longitudinales creuses (3) unies à ce(s) membre(s) de plaque (1) ou le(les) intégrant, ces rigoles faisant partie d'un circuit ouvert ou fermé comprenant un conduit de distribution (6) et au moins un conduit collecteur (7) avec lesquels ces rigoles communiquent à travers ses extrémités respectives (3a, 3b), un fluide caloporteur (A) étant véhiculé à travers ce circuit, **caractérisée en ce que**:
ces rigoles formant ces configurations longitudinales creuses (3) sont directement exposées, au moins en partie, à la radiation solaire; et
tous les membres que comporte la couverture, notamment ces membres de plaque imperméables (1) et ces rigoles formant des configurations longitudinales creuses (3) , ont une fonction double:
d'une part, une fonction structurelle comme support du toit; et
d'autre part, une fonction collectrice d'énergie comme surface de réception de radiation solaire et des conduits pour ce fluide caloporteur (A), respectivement, constituant ensemble les éléments de renfort structurel du toit, en étant capables de supporter le tout ou partie des contraintes de design de cette couverture.

2. Une couverture conformément à la revendication 1, **caractérisée en ce que** ce conduit de distribution (6) et le conduit collecteur (7) assurent également une fonction structurelle comme support du toit.

3. Une couverture conformément à la revendication 1, **caractérisée en ce que** ces configurations creuses, longitudinales (3) comportent des membres tubulaires (40) reliés à ce membre de plaque (1) par soudure ou par une substance adhésive.

4. Une couverture conformément à la revendication 1, **caractérisée en ce que** ces configurations longitudinales creuses (3) sont formées, au moins en partie, avec le même matériau que ce membre (1) de plaque imperméable à l'eau, conducteur de la chaleur, au moyen:
d'une opération de façonnage qui intervient sur ce membre de plaque (1) à plusieurs endroits espacés pour déterminer ainsi des rigoles longitudinales (30) délimitées par des bords latéraux (31); et
de la fermeture de ces rigoles (30) en joignant ces bords latéraux (31);

5. Une couverture conformément à la revendication 1, **caractérisée en ce que** ces configurations longitudinales creuses (3) sont formées par des membres (50) en matériau conducteur de la chaleur et à coupe transversale ouverte, telle qu'une coupe transversale en "U" , reliées à ce membre de plaque (1) conducteur de la chaleur aux bords (51) des extrémités de ses pattes.

6. Une couverture conformément à la revendication 1, 2, 3, 4 ou 5, **caractérisée en ce que** ce membre de plaque (1) comprend de plus uni à lui par soudure et/ou par une substance adhésive:
un tuyau (60) faisant l'office de conduit de distribution (6) auquel ces premières extrémités (3a) des configurations longitudinales (3) sont reliées; et
un tuyau (70) faisant l'office de ce conduit collecteur (7) auquel sont reliées ces deuxièmes extrémités (3b) des configurations longitudinales (3);
de sorte qu'un circuit est formé pour ce fluide caloporteur (A) qui appartient spécifiquement à ce membre de plaque (1), avec une entrée (61) dans ce tuyau (60) faisant l'office de conduit de distribution (6) et une sortie (71) de ce tuyau (70) faisant l'office de ce conduit collecteur (7), ce circuit étant adapté pour faire partie de ce circuit ouvert ou fermé.

7. Une couverture conformément à la revendication 1, 2, 3, 4, 5 ou 6, **caractérisée en ce que** ce membre de plaque (1) comprend de plus:
une couche (5) de matériau isolant de la chaleur tel que de la mousse de polymère .ou de copolymère, fibre de verre, etc. revêtant sa surface non exposée à la radiation solaire, cette couche de matériau isolant de la chaleur revêtant également, le cas échéant, les parois des configurations longitudinales (3) présentes sur cette surface; et
une plaque ou feuille de finition (18) revêtant la surface ouverte de cette couche (5) de matériau isolant de la chaleur.

8. Une couverture conformément à la revendication 4, **caractérisée en ce que** cette fermeture des rigoles (30) se fait en joignant les bords latéraux directement contigus ou les bords latéraux espacés (31) au moyen d'une membre ajouté (32).

9. Une couverture conformément à la revendication 4, 5 ou 8, **caractérisée en ce que** cette union et/ou jonction se fait par soudure ou par une substance adhésive, cette substance adhésive étant possiblement formée en tout ou partie par une couche de matériau isolant de la chaleur qui couvre la surface de l'ensemble qui n'est pas exposée à la radiation solaire.

10. Une couverture conformément à la revendication 1, **caractérisée en ce qu'**elle comprend une couche (5) de matériau isolant de la chaleur tel que de la mousse de polymère ou copolymère, fibre de verre ou assimilé revêtant la surface non exposée à la radiation solaire de l'ensemble formé par les membres de plaque (1), cette couche étant appliquée après avoir construit cette couverture au moyen d'un procédé de revêtement tel que par fixation ou arrosage de la plaque, avec ou sans plaque ou feuille de finition (18) revêtant la surface ouverte de cette couche (5) de matériau isolant de la chaleur.

11. Une couverture conformément à la revendication 1, **caractérisée en ce qu'**elle comprend un seul conduit de distribution (6) et un seul conduit collecteur (7) pour plusieurs membres de plaque (1), cette connexion entre les premières extrémités (3a) des configurations longitudinales (3) et ce conduit de distribution (6) et entre ces deuxièmes extrémités (3b) des configurations longitudinales (3) et ce conduit collecteur (7) étant mise en oeuvre en les emboîtant, en les vissant ou une connexion serrée équivalente dans laquelle des couplages rigides (17) solidaires d'une des parties sont pressés ou vissés ou fermement fixés d'une autre façon dans les trous correspondants équipés d'un obturateur et qui se trouvent à l'autre partie, ou au moyen de couplages élastiques fixés à leurs extrémités à des tétons solidaires de chacune des pièces.

12. Une couverture conformément à la revendication 1, **caractérisée en ce que** ce circuit pour le fluide caloporteur (A), duquel le conduit de distribution (6), les configurations longitudinales (3) et le conduit collecteur (7) font partie, est un circuit fermé primaire comportant au moins une section d'échange de chaleur qui comprend au moins un réservoir (8), revêtu d'une couche (12) de matériau isolant de la chaleur, pour un fluide du circuit secondaire, ce au moins un réservoir (8) faisant de plus l'office de support structurel de la couverture en supportant en tout ou partie le conduit collecteur (7).

13. Un panneau intégrant une couverture collectrice d'énergie solaire pour bâtiments, cette couverture étant du genre qui comprend une surface de réception de radiation solaire, prévue pour remplacer une partie du toit obtenu d'un membre (1) de plaque imperméable à l'eau, conducteur de la chaleur, adapté pour être relié à d'autres membres de plaque semblables de panneaux contigus en établissant ainsi des connections imperméables à l'eau et une pluralité de rigoles formées par des configurations longitudinales creuses (3) rattachées à ces membres (1) de plaque ou intégrées dans ceux-ci, ces rigoles faisant partie d'un circuit ouvert ou fermé comprenant un conduit de distribution (6) et au moins un conduit collecteur (7) avec lequel ces rigoles sont communiquées à travers leurs extrémités respectives (3a, 3b), un fluide caloporteur (A) étant véhiculé à travers ce circuit, **caractérisé en ce que**:
aux extrémités opposées de ce membre de plaque (1) un tuyau (60) qui fonctionne comme cet conduit de distribution (6) et un tuyau (70) qui fonctionne comme ce conduit collecteur (7) sont unis et communiquent avec ces rigoles à travers leurs extrémités respectives (3a, 3b) en formant ainsi un circuit auxiliaire pour ce fluide (A) caloporteur appartenant spécifiquement à ce panneau, avec une entrée (61) à ce tuyau (60) et une sortie (71) de ce tuyau (70), ce circuit auxiliaire spécifique étant adapté pour faire partie d'un circuit général qui peut être ouvert ou fermé, dans lequel
cette rigole formant des configurations longitudinales creuses (3) est au moins en partie directement exposée à la radiation solaire, et
tous les membres principaux compris dans le panneau, notamment ces membres de plaques imperméables à l'eau (1), cette rigole formant des configurations longitudinales creuses (3) et ces tuyaux (60, 70) assurent une fonction double:
d'une part, une fonction structurelle comme support du toit; et
d'autre part une fonction collectrice d'énergie comme surface de réception de radiation solaire et des conduits pour ce fluide caloporteur (A), respectivement, en constituant un ensemble rigide capable de supporter complètement ou en large mesure les contraintes de charge du design correspondant à la zone de surface de la couverture formée par ce panneau.

14. Un panneau conformément à la revendication 13, **caractérisé en ce qu'**il comprend de plus une couche (5) de matériau isolant de la chaleur tel que de la mousse de polymère ou copolymère, fibre de verre ou assimilé revêtant cette surface du membre de plaque (1) qui n'est pas exposée à la radiation solaire et si cette couche (5) de matériau isolant de la chaleur doit être visible il est préférable d'ajouter une plaque ou feuille de finition (18) revêtant la surface ouverte de celle-là.

15. Un panneau conformément à la revendication 13 **caractérisé en ce qu'**il comprend de plus un revêtement en matériau isolant de la chaleur tel que de la mousse de polymère ou copolymère, fibre de verre ou assimilé pour ces tuyaux (60, 70).

16. Un panneau conformément à la revendication 13, **caractérisé en ce que** ces attachements forment ou sont intégrés dans les configurations longitudinales (3) avec le membre de plaque (1) et les attachements entre le membre de plaque (1) et les tuyaux (60, 70) et les connections des première et deuxième extrémités (3a) et (3b) des configurations longitudinales (3) aux tuyaux (60, 70) sont des attachements et des connections mises en oeuvre par soudure, par une substance adhésive, par nervurage , façonnage ou une combinaison de ces techniques, ces attachements et connections étant étanches lorsque ce circuit de ce fluide caloporteur (A) est fermé.
